# EUROPÄISCHE PATENTSCHRIFT

(11) **EP 2 812 119 B1**
(45) Veröffentlichungstag und Bekanntmachung des Hinweises auf die Patenterteilung: **28.02.2018**
(21) Anmeldenummer: 12718325.9
(22) Anmeldetag: 15.03.2012
(51) Int. Cl.: B03C 1/033, B03C 1/22

(54) **VERFAHREN UND VORRICHTUNG ZUR TRENNUNG NICHTMAGNETISCHER BESTANDTEILE AUS EINEM GEMENGE VON METALLSCHROTT**
METHOD AND DEVICE FOR SEPARATING NONMAGNETIC COMPONENTS FROM A MIXTURE OF SCRAP METAL
PROCÉDÉ ET DISPOSITIF DE SÉPARATION DES CONSTITUANTS NON MAGNÉTIQUES D'UN MÉLANGE DE DÉCHETS MÉTALLIQUES

(30) Priorität: 09.02.2012 DE 102012002528
(43) Veröffentlichungstag der Anmeldung: 17.12.2014
(73) Patentinhaber: KOSLOW, Alexander, 84036 Landshut (DE)
(72) Erfinder: KOSLOW, Alexander, 84036 Landshut (DE)
(74) Vertreter: Lang, Johannes
(86) Internationale Anmeldenummer: PCT/IB2012/000502
(87) Internationale Veröffentlichungsnummer: WO 2013/117952

(56) Entgegenhaltungen:
- DE-C- 311 387
- DE-U1-202011 100 997
- GB-A- 1 000 245
- US-A- 3 935 947
- US-A- 4 214 984

## Beschreibung

Gemische von Metallschrott werden meist von der Industrie als Abfallprodukt aus Fertigungsprozessen geliefert und bestehen aus einem Gemenge von magnetischen und nichtmagnetischen Metallteilen sowie anderen Reststoffen. Da für eine Weiterverarbeitung nur reine Metalle einer Sorte, z.B. magnetische Bestandteile wie Eisenteile oder nichtmagnetische Stoffe wie Kupfer von Interesse sind, haben die Abfallentsorgungsunternehmen die Aufgabe, solche Gemische wieder in die einzelnen Komponenten, nach der jeweiligen stofflichen Eigenart, zu trennen. Hierbei ergibt sich eine nicht unerhebliche Schwierigkeit, da die einzelnen Komponenten der im Gemisch enthaltenen Metallsorten so stark miteinander durch Haftkräfte und/oder lose Anbindungen verbunden sein können, dass z.B. der Einsatz eines üblichen Magnetabscheiders nicht in der Lage ist, magnetische Komponenten von nichtmagnetischen sauber zu trennen. Feinste nichtmagnetische Partikel haften meist noch an magnetischen Teilen und/oder sind mit diesen durch lose Anbindungen verwoben und gelangen somit zusammen mit den magnetisierbaren Teilen zur weiteren Verhüttung. Ein aus einem solchen Mischgut gewonnener Stahl genügt indes nicht mehr den heutigen hohen Anforderungen an die gewünschte Reinheit eines hochwertigen Stahls, da die Stahlqualität darunter leidet. Um die heute geforderte Stahlqualität zu erreichen ist unabdingbar, dass der zur Verhüttung freigegebene Schrott aus reinem Eisen besteht und keine nicht magnetisierbaren Bestandteile, wie z.B. Kupfer, als Beimischung, auch nicht in Form von Kupferstaub, selbst nicht einmal in geringer Beimischung enthält.

Eine saubere Trennung von magnetisierbarem und nicht magnetisierbarem Material ist eine Aufgabe der Erfindung.

Diese Aufgabe wird durch die in den unabhängigen Ansprüchen definierte Erfindung gelöst; Ausgestaltungen der Erfindung sind in den abhängigen Ansprüchen definiert.

Bisher ist es üblich sog. Magnetabscheider hierzu zu benutzen. Dies sind Magnetstrecken, die über einem Transportband, das aus nichtmagnetisierbarem Material besteht, angeordnet Magneten aufweist. Diese Vorrichtung wird mit einem Gemenge aus Metallschrott, das unterschiedliche Metalle enthält, beschickt. Die Magnete ziehen das magnetisierbare Material an, lassen jedoch nur einen Bruchteil des nichtmagnetisierbaren Anteils vom Transportband in einen Reststoffbehälter fallen. Diese Art der Abtrennung von magnetisierbaren Bestandteilen im Metallgemenge ist ungenügend, da nichtmagnetisierbare Partikel an den magnetisierbaren Teilen noch haften, da sie mit diesen noch lose verbunden sind.

Eine bekannte Einrichtung schlägt hierfür vor, ein Metallschrottgemenge über ein Förderband an eine Transportbandeinrichtung heranzuführen, die von einer Magnetbandfördereinrichtung gebildet ist, deren Transportband an beiden Enden über Umlenkrollen geführt ist. Im Zwischenraum zwischen dem Ober- und Untertrum des Transportbandes sind nahe dem Untertrum Magnete in Reihe hintereinander angeordnet, wobei die Magnete auch intermittierend aktiviert und deaktiviert werden können. Diese bekannte Trockenabscheideeinrichtung von amagnetischen Bestandteilen aus einem Metallschrottgemenge (DE-Patentschrift 311 387) ist jedoch den heutigen Anforderungen nicht mehr gewachsen. Das Metallschrottgemenge wird zwar entlang einer Magnetreihe geführt, indes ist das Metallgemenge am Transportband nicht hinreichend in Bewegung gehalten, um magnetisierbare Anteile von nichtmagnetisierbaren zu trennen, selbst wenn hierfür auf dem Transportband noch zusätzliche Mitnahmeleisten vorgesehen sind. Die Polzuordnung der Magnete ist bei der bekannten Einrichtung so gewählt, dass jeweils auf einen Südpol eines vorausgehenden Magneten ein Nordpol beim nachfolgenden Magneten folgt und dieser Nordpol wieder von einem Südpol abgelöst wird. Somit entsteht zwar ein steter Wechsel zwischen Nordpol und Südpol, indes bewirkt dieser Polwechsel keine ausreichende Bewegung im zu trennenden Metallschrottgemenge. Diese Magnetorientierung Nord-Süd bewirkt nur eine ungenügende, wenn überhaupt, Bewegung von dem zu reinigenden, am Transportband geführten Metallschrottgemenge.

Die meisten bekannten Magnetsortiereinrichtungen folgen diesem bekannten Schema der Polzuordnung, nämlich auf einen Nordpol folgt ein Südpol. Diese Polzuordnung erfolgt über die gesamte Magnetstrecke des Untertrums einer Überbandmagneteinrichtung (siehe z.B. deutsche Patentschrift 52 411). Auch sind Einrichtungen bekannt, die nach einem System von Wurfparabeln arbeiten, indem das zu trennende Gemenge aus Metallschrott und anderen Stoffen mittels eines Förderbandes über eine rotierende Magnetwalze geführt wird, die die einzelnen Stoffe in unterschiedliche Weiten schleudert. All diese Systeme sind für eine saubere Trennung von Eisen und nichtmagnetisierbaren Stoffen ungeeignet, da vielfach der Zufall den Trennvorgang beeinflusst (siehe z.B. britische Patentschrift 1594 2160).

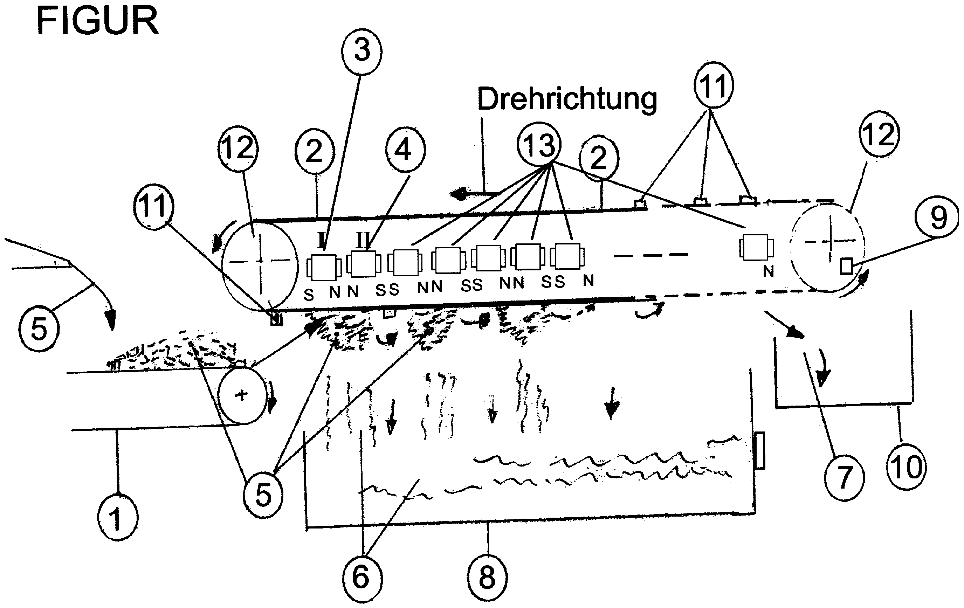

In der britischen Patentschrift 1000245 ist zwar neben einer Polzuordnung Nord-Süd (siehe Fig. 6) auch eine Polzuordnung Süd-Süd gefolgt von einer Polzuordnung Nord-Nord in Fig. 5 gezeigt, jedoch wird das bei meiner Erfindung aufgezeigte Problem weder angesprochen noch ein Vorschlag zur Lösung aufgezeigt. Bei diesem Stand der Technik liegt das zu trennende Gemenge aus Sand und Gold (zweier amagnetischer Stoffe) auf dem Transportband und die Trennung erfolgt durch einen Wasserstrahl. Aus diesem Grunde können auch die Magnetpole durch ein neutrales Element (11) voneinander getrennt sein. Im Gegensatz hierzu sind die Pole bei der Erfindung dicht aneinander in fortlaufender Reihe angeordnet, so dass die Magnetkraft das magnetisierbare Eisen auf seinem gesamten Transportweg hängend am amagnetischen Transportband derart hält, dass es nicht abfällt, gleichzeitig aber eine Rüttelbewegung ausführt und amagnetische Bestandteile aus dem Metallgemenge ausschüttelt.

Bei der US-Patentschrift 3,935,947 sind Transportmagnete nicht in einer fortlaufenden Reihe nahe zueinander angeordnet. Auf einen Aufnahmemagneten folgt ein Übernahmemagnet und dann ein Abwurfmagnet. Eine fortlaufende Magnetreihe innerhalb eines rotierenden Förderbandes, entlang dessen das transportierte Material eine kontinuierliche Schüttelbewegung auf dem gesamten Transportweg ausführt, so dass amagnetische Bestandteile ausgeschüttelt werden, ist auch dieser Druckschrift nicht zu entnehmen.

DE 20 2011 100 997 U1 offenbart eine Vorrichtung zur Absonderung aller nichtmagnetischer Bestandteile aus einem Gemenge von Metallschrott zur Erzielung reinen Eisenschrotts mit einem Unterbandmagneten, der ein Transportband mit erhöhter Oberflächenrauheit aufweist.

Dieses Problem löst die Erfindung. Beim Verfahren nach meiner Erfindung wird eine Intensivierung der Bewegung am Förderband, unterhalb den in Reihe angeordneten Magneten, dadurch erreicht, dass auf einen Nordpol des vorausgehenden Magneten ein Nordpol des Folgemagneten und auf den Südpol ein Südpol des weiteren Magneten folgt. Es stehen sich in der Folge der Magneten stets gleiche Pole einander gegenüber, also Nordpol zu Nordpol, gefolgt von Südpol zu Südpol und wieder Nordpol zu Nordpol. Diese magnetische Zuordnung bewirkt, dass das am Transportband bewegte Material kontinuierlich eine um die Horizontale rotierende und schüttelnde Bewegung ausführt und dabei alle nichtmagnetischen Bestandteile aus- und abgeworfen werden. Die Anzahl der in Reihe angeordneten Magnete richtet sich nach dem gewünschten Reinheitsgrad, d.h. je mehr Magnete hintereinander angeordnet sind, desto höher ist der erzielte Reinheitsgrad. Um den Einfluss von Magnetkräften voll wirksam werden zu lassen, sind technische Maßnahmen vorgesehen, um das Metallgemenge vor einer Beschickung der Überbandmagneteinrichtung bereits aufzubereiten, z.B. mittels eines Zerkleinerers, z.B. Shredders oder einer Hammermühle und dabei größenmäßig zu homogenisieren. Zur Unterstützung des Transports und der Bewegung kann das Band des Überbandmagneten auf der, dem aufgebrachten Metallgemenge zugewandten Oberfläche mit einer Art Noppen oder Höcker oder Querleisten ausgestattet sein. So gestaltet wird das Metallgemenge, das von dem, mittels der Magnetblöcke erzeugten Magnetfeld gegen die den Magnetblöcken gegenüberliegende Fläche des Bandes angezogen, weggerissen und dabei zusätzlich beim Weitertransport bewegungsfördernd beeinflusst. Daher sind die Noppen in Gestalt und Anordnung variabel ausgeführt und über die gesamte Länge und Breite des Bandes verteilt angeordnet. Wichtig ist nur, das Schüttgut ständig in intensiver Bewegung zu halten, so dass sich nichtmagnetisierbare Partikel vom magnetisierbaren Material lösen. Da das vom ersten Magnetblock angezogene Material neben magnetisierbaren Bestandteilen nichtmagnetisierbare Partikel enthält, die an den magnetisierbaren Materialteilen anhaften und/oder mit diesen lose verbunden sind, wird das vom ersten Magneten angezogene Material mittels des mit Vorsprüngen versehenen Bandes aus dem Wirkungsbereich des ersten Magnetblockes forttransportiert und in den Wirkungsbereich des nachfolgenden Magnetblockes verbracht. Selbst dann, wenn man zur Intensivierung der Bewegung des am Transportband entlang der Magnetstrecke alternierende Polausrichtungen wählt, ist es unabdingbar, dass aufeinanderfolgende Magnete stets mit gleicher Polrichtung einander zugeordnet bleiben, d.h. Nord-Nord; Süd-Süd. Dies bewirkt durch die dadurch erzeugte Bewegung, dass sich nichtmagnetisierbare Materialien von magnetisierbarem Material loslösen und nach unten wegfallen. Dieser Vorgang wird sooft wiederholt bis von nichtmagnetisierbaren Anteilen befreites Eisen erhalten wird. Bei den Magnetblöcken können sowohl Permanent- als auch Elektromagnete eingesetzt werden.

Elektro-Magnetblöcke in Reihe hintereinander haben den Vorteil gegenüber Permanentmagneten, dass sie elektrisch über eine Steuereinrichtung so schaltbar sind, dass ein stromauf im Materialfluss angeordneter Magnetblock abschaltet, d. h. magnetisch inaktiv gemacht werden kann, wenn stromab von diesem ein Magnetblock auf magnetisch aktiv geschaltet wird und umgekehrt. Hierbei wird der Übergang von einem Magnetblock zum anderen, durch Wegfall der Adhäsionskräfte, die Loslösung von amagnetischem Material von magnetisierbarem Material erleichtert. Nicht magnetische Partikel können vom magnetisierbaren Material dann leichter abfallen und der stromab folgende Magnetblock nimmt magnetisierbares Material wieder auf, das bereits einem ersten Trennvorgang von amagnetischen Stoffen unterworfen war. Dieses Spiel kann so oft wiederholt werden, bis weitestgehend gereinigtes, d. h. von nicht magnetisierbaren Stoffen befreites reines Eisen erhalten ist.
Eine weitere Entwicklung schlägt vor die Magnetblöcke mit Vibrationseinrichtungen auszustatten, sodass das von einem Magnetblock angezogene Material auch am Magnetblock selbst in intensiver Bewegung gehalten wird und Partikel, die nicht über Magnetkräfte gehalten sind, abschütteln werden.
Ebenso können die Umlenkrollen an den Enden des Bandes mit Vibratoren ausgestattet sein, um das gesamte Band in einer Schüttelbewegung zu halten, sodass alle Metallteile, die nicht magnetisch sind abgeschüttelt werden.
Ergänzend oder auch separat kann eine solche Trennung von nichtmagnetisierbaren Bestandteilen aus einem Gemenge von Metallschrott unterstützend oder auch separat erreicht werden, wenn man das Gemenge von Metallschrott mit einem unter Hochdruck stehenden Gasstrom, z. B. Luftstrom, oder einer Flüssigkeitsdusche, möglichst ebenfalls unter Druck, z. B. Wasserdusche mit oder ohne chemische Zusätze, behandelt und damit den magnetischen Anteil im Metallgemenge von nichtmagnetisierbaren Gemengeanteilen befreit.
Alle diese zusätzlich angegebenen Maßnahmen können separat oder zusammen eingesetzt werden, sodass man optimale Verhältnisse für die Trennung von magnetisierbarem Material von amagnetischem Material schafft.

### Figurenbeschreibung:

Über das Förderband (1) wird ein Gemenge aus Metallschrott, das mittels eines Shredders oder einer Hammermühle zerkleinert wurde, in das Magnetfeld eines ersten Magnetblocks I (3) einer Umlaufbandmagneteinrichtung verbracht. Das Magnetfeld des ersten Magnetblocks I (3) zieht das Metallschrottgemenge (5) an, das auf dem amagnetischen Transportband (2) unterhalb der in Reihe in Förderrichtung angeordneten Magnetblöcke transportiert wird. Leicht loslösendes, nicht magnetisierbares Material (6) fällt nach unten in einen Sammelbehälter (8). Das amagnetische Transportband (2) weist an seiner dem Metallschrottgemenge (5) zugewandten Seite Noppen oder Höcker (11) auf, bzw. kann auch nur eine angeraute Oberfläche haben, um den Metallschrott (5) besser mitnehmen und zum nächstfolgenden Magnetblock II (4) transportieren zu können. Bei diesem Transport von einem vorausgehenden Magnetblock (3) zum nächstfolgenden Magnetblock (4) schwebt das Metallgemenge kurzfristig, so dass nichtmagnetisierbares Material (6) sich vom magnetisierbaren Metall (5) lösen und in den Sammelbehälter (8) fallen kann. Dieser Vorgang ist nur möglich, wenn die Polzuordnung der aufeinanderfolgenden Magnete (3, 4) so gewählt ist, dass ein Nordpol eines Folgemagneten (4) einem Nordpol des vorausgehenden Magneten (3) und ein Südpol einem Südpol gegenüber steht. Dieser Vorgang wird so häufig wiederholt, bis das magnetisierbare Metall (5) von nichtmagnetisierbaren Stoffanteilen (6) befreit ist. Die Anzahl (n) der aufeinanderfolgenden Magnetblöcke (m) richtet sich ausschließlich nach dem gewünschten Reinheitsgrad des magnetisierbaren Materials. Das amagnetische Transportband (2) läuft am Ende und am Anfang der Magnetstrecke über Umlenkrollen (12), von denen mindestens eine mit einem elektromotorischen, in seiner Drehzahl steuerbaren Elektroantrieb verbunden ist und das amagnetische Transportband (2) antreibt. Das amagnetische Transportband (2) ist endlos. Über mindestens eine Umlenkrolle werden die Antriebskräfte, die von einem Elektroantrieb herrühren, auf das amagnetische Transportband (2) übertragen. Um die Möglichkeit der Abtrennung von amagnetischen Schrottelementen (6) vom magnetischen Schrottanteil (5) weiter zu verbessern, sind die Magnetblöcke (m) mit Vibratoren (9) verbunden. Der so gereinigte Eisenschrott (7) kann in Folge einer Verhüttung zugeführt werden.

### Legende:

- 1: Förderband
- 2: Transportband
- 3: Magnetblock I
- 4: Magnetblock II
- 5: Metallschrottgemenge
- 6: Amagnetisches Material
- 7: Eisenschrott (gereinigt)
- 8: Sammelbehälter
- 9: Vibrationseinrichtung
- 10: Fe-Sammelbehälter
- 11: Noppen und/oder Höcker
- 12: Umlenkrollen (mit E-Antrieb)
- 13: Anzahl der Magnetblöcke (n)

## Patentansprüche

1. Verfahren zur Trennung nicht-magnetischer Bestandteile (6) aus einem Gemenge (5) von zerkleinertem Metallschrott mittels eines Überbandmagneten, dessen nicht-magnetisches Transportband (2) an seiner dem zu trennenden Gemenge zugekehrten Seite einen erhöhten Rauhigkeitsgrad aufweist und das Gemenge längs einer Magnetstrecke (13) mit einem ersten und weiteren, in Transportrichtung in Reihe angeordneten Magneten transportiert,
**dadurch gekennzeichnet,**
**dass** das Gemenge längs einer Magnetstrecke geführt wird, deren Magnete mit ihrer magnetischen Achse in Transportrichtung ausgerichtet sind und jeweils gleichnamige Pole benachbarter Magnete einander gegenüber liegen.

2. Vorrichtung zur Trennung nicht-magnetischer Bestandteile (6) aus einem Gemenge (5) von zerkleinertem Metallschrott, enthaltend:
eine Vielzahl von Magneten (13), die in einer Reihe über einem nicht-magnetischen Transportband (2) angeordnet sind;
wobei das nicht-magnetische Transportband (2) eingerichtet ist, das Gemenge (5) entlang der Vielzahl von Magneten zu transportieren; und
wobei das nicht-magnetische Transportband (2) an seiner dem zu trennenden Gemenge zugekehrten Seite einen erhöhten Rauhigkeitsgrad aufweist;
**dadurch gekennzeichnet, dass**
die magnetische Achse jedes Magneten aus der Vielzahl von Magneten (13) in Transportrichtung des nicht-magnetischen Transportbands (2) ausgerichtet ist; und
jeweils gleichnamige Pole benachbarter Magnete der Vielzahl von Magneten (13) einander gegenüberliegen.

3. Vorrichtung nach Patentanspruch 2, **dadurch gekennzeichnet, dass** das nicht-magnetische Transportband (2) auf seiner dem Gemenge zugewandten Seite Noppen oder Höcker (11) oder andersartige Vorsprünge aufweist.

4. Vorrichtung nach einem der Patentansprüche 2 und 3, **dadurch gekennzeichnet, dass** ein Förderband (1) vorgesehen ist, um dem Transportband (2) ein Gemenge zuzuführen, das in einer Zerkleinerungsmühle, wie einem Shredder oder einer Hammermühle, aufbereitet wurde.

5. Vorrichtung nach einem der Patentansprüche 2 bis 4, **dadurch gekennzeichnet, dass** jeder Magnet aus der Vielzahl von Magneten (13) ein Elektromagnet ist, der mit einer elektrischen Steuereinrichtung zusammenwirkt, die dazu eingerichtet ist, jeweils einen in Transportrichtung nachfolgenden Magneten (4) aus der Vielzahl von Magneten magnetisch wirksam und gleichzeitig den in Transportrichtung vorausgehenden Magneten (3) aus der Vielzahl von Magneten magnetisch unwirksam zu schalten.

6. Vorrichtung nach einem der vorhergehenden Patentansprüche 2 bis 5, **dadurch gekennzeichnet, dass** das nicht-magnetische Transportband (2) über mindestens zwei Umlenkrollen (12) geführt ist, von denen mindestens eine dazu eingerichtet ist, die Antriebskräfte einer steuerbaren elektromotorischen Antriebsvorrichtung auf das nicht-magnetische Transportband (2) zu übertragen.

7. Vorrichtung nach Patentanspruch 6, **dadurch gekennzeichnet, dass** die Magnete und/oder die Umlenkrollen mit Vibratoren (9) ausgestattet sind.

8. Vorrichtung nach einem der Patentansprüche 2 bis 7, **dadurch gekennzeichnet, dass** Düsen vorgesehen sind, deren Austrittsöffnung auf das von einem Magneten (3,4) angezogenen Gemenge (6) gerichtet ist, um einen Gasstrom auf das Gemenge unter Hochdruck zu blasen und / oder Flüssigkeit unter Druck zu spritzen.

## Claims

1. A method of separating non-magnetic parts (6) from a mixture (5) of comminuted metal scrap by means of over-belt magnets, the non-magnetic conveyor belt (2) of which exhibits, on the side facing the mixture to be separated, an increased level of roughness and the mixture is transported along a magnet track (13) with a first and further magnets arranged in a row in the direction of transport,
**characterised in that**,
the mixture is guided along the magnet track, the magnets of which are, with their magnetic axis, aligned in the feeding direction and each correspondent pole of neighbouring magnets are positioned opposite one another.

2. A device for separating non-magnetic parts (6) from a mixture (5) of comminuted metal scrap, comprising:
a plurality of magnets (13) arranged in a row over the non-magnetic conveyer belt (2);
wherein the non-magnetic conveyer belt (2) is configured to transport the mixture (5) along the plurality of magnets; and
wherein the non-magnetic conveyor belt (2), on its side facing the metal scrap to be separated, exhibits an increased level of roughness;
**characterised in that**
the magnetic axis of each magnet of the plurality of magnets (13) is aligned in the feeding direction of the non-magnetic conveyor belt (2); and
each correspondent pole of neighbouring magnets of the plurality of magnets (13) are positioned opposite one another.

3. The device according to claim 2, **characterised in that** the side of the non-magnetic conveyer belt (2) facing the mixture exhibits nubs or humps (11) or other types of protrusions.

4. The device according to one of claims 2 and 3, **characterised in that** a feeding belt (1) is provided in order to feed the conveyor belt (2) a mixture that was processed in a grinding mill such as a shredder or a hammer mill.

5. The device according to one of the claims 2 to 4, **characterised in that** each magnet of the plurality of magnets (13) is an electromagnet that cooperates with an electrical control device which is configured to respectively switch one of the successive magnets (4) in the feed direction of the plurality of magnets magnetically active and simultaneously the preceding magnet (3) of the plurality of magnets magnetically inactive.

6. The device according to one of the preceding claims 2 to 5, **characterised in that** the non-magnetic conveyor belt (2) is guided by at least two guide rollers (12), of which one is configured to transmit driving forces of a controllable electrical drive to the non-magnetic conveyer belt (2).

7. The device according to claim 6, **characterised in that** the magnets and/or the rollers are equipped with vibrators (9).

8. The device according to one of the claims 2 to 7, **characterised in that** nozzles are provided, the outlet ports of which are directed towards the mixture (6) attracted by one of the magnets (3,4) in order to blow a gas stream on the mixture under high pressure and/or to squirt liquid under pressure.

## Revendications

1. Procédé de séparation de parties non-magnétiques (6) d'un mélange (5) de déchets métalliques broyés au moyen d'un tapis magnétique, dont la bande transporteuse non-magnétique (2) présente sur le côté tourné vers le mélange à séparer un niveau accru de rugosité et le mélange est transporté le long d'une piste magnétique (13) avec un premier et d'autres aimants disposés en une rangée dans la direction de transport,
**caractérisé en ce que**
le mélange est guidé le long de la piste magnétique, dont les aimants sont, avec leur axe magnétique, alignés dans la direction de transport et chaque pôle correspondant d'aimants voisins sont positionnés en regard l'un de l'autre.

2. Un dispositif pour séparer des parties non-magnétiques (6) d'un mélange (5) de déchets métalliques broyés, comprenant:
une pluralité d'aimants (13) disposés en une rangée sur une bande transporteuse non-magnétique (2);
dans lequel la bande transporteuse non-magnétique (2) est configurée pour transporter le mélange (5) le long de la pluralité d'aimants; et
dans lequel la bande transporteuse non-magnétique (2), sur son côté tourné vers le mélange à séparer, présente un niveau de rugosité accru;
**caractérisé en ce que**
l'axe magnétique de chaque aimant de la pluralité d'aimants (13) est aligné dans la direction de transport de la bande transporteuse non-magnétique (2); et
chaque pôle correspondant d'aimants voisins de la pluralité d'aimants (13) sont positionnés en regard l'un de l'autre .

3. Dispositif selon la revendication 2, **caractérisé en ce que** le côté de la bande transporteuse non-magnétique (2) tourné vers le mélange présente des tétons ou bosses (11) ou d' autres types de saillies.

4. Dispositif selon l'une des revendications 2 et 3, **caractérisé en ce qu'**un convoyeur à courroie (1) est prévu pour alimenter la bande transporteuse (2) en un mélange qui a été traité dans un moulin à broyage tel qu'un déchiqueteur ou un broyeur à marteaux.

5. Dispositif selon l'une quelconque des revendications 2 à 4, **caractérisé en ce que** chaque aimant de la pluralité d'aimants (13) est un électro-aimant qui interagit avec un dispositif de commande électrique configuré pour respectivement commuter magnétiquement l'un des aimants successifs (4) dans la direction de transport de la pluralité d'aimants et simultanément décommuter magnétiquement l'aimant précédent (3) de la pluralité d'aimants.

6. Dispositif selon l'une des revendications précédentes 2 à 5, **caractérisé en ce que** la bande transporteuse non-magnétique (2) est guidée par au moins deux rouleaux de guidage (12), dont l'un est configuré pour transmettre à la bande transporteuse non-magnétique (2) les forces d'entraînement d'un mécanisme d'entraînement électrique à commande.

7. Dispositif selon la revendication 6, **caractérisé en ce que** les aimants et/ou les rouleaux de guidage sont équipés de vibrateurs (9).

8. Dispositif selon l'une des revendications 2 à 7, **caractérisé en ce qu'**il est prévu des buses dont les orifices de sortie sont dirigés vers le mélange (6) attiré par l'un des aimants (3, 4) afin de souffler un flux gazeux sur le mélange sous haute pression et/ou projeter du liquide sous pression .
